# DEMANDE DE BREVET EUROPEEN

(11) **EP 3 106 987 A2**
(43) Date de publication de la demande: **21.12.2016**
(21) Numéro de dépôt: 16172283.0
(22) Date de dépôt: 31.05.2016
(51) Int. Cl.: G06F 11/22

(54) **DISPOSITIF DE TEST MULTIPROTOCOLE D'UN MICROCIRCUIT SECURISE, ET PROCEDE CORRESPONDANT**

(30) Priorité: 16.06.2015 FR 1555492
(71) Demandeur: OBERTHUR TECHNOLOGIES, 92700 Colombes (FR)
(72) Inventeur: ARZUR, Stéphane, 92700 COLOMBES (FR); DAVIEAUD, Patrick, 92700 COLOMBES (FR); MORIN, Nicolas, 92700 COLOMBES (FR)
(74) Mandataire: Underwood, Nicolas Patrick

(57) **Abrégé**

Dispositif de test multiprotocole d'un microcircuit sécurisé (24), ledit dispositif de test comprenant :
- une première unité de contrôle (22A) apte à réaliser un premier envoi d'une première commande au microcircuit selon un premier protocole de communication (PTA) ; et
- une deuxième unité de contrôle (22B) apte à réaliser un deuxième envoi d'une deuxième commande au microcircuit selon un deuxième protocole de communication (PTB) distinct dudit premier protocole de communication ;
lesdites première et deuxième unités de contrôle étant aptes à communiquer ensemble de sorte à déclencher lesdits premier et deuxième envois de façon coordonnée dans le temps.

## Description

### Arrière-plan de l'invention

La présente invention concerne les tests multiprotocoles de microcircuits et porte plus particulièrement sur un dispositif de test multiprotocole d'un microcircuit et sur un procédé de test correspondant mis en oeuvre par un tel dispositif de test.

On entend ici par « test multiprotocole » d'un microcircuit un test permettant de tester un microcircuit selon au moins deux protocoles de communication distincts.

L'invention s'applique en particulier, mais de façon non limitative, au test multiprotocole d'un microcircuit d'une carte à puce ou d'un microcircuit embarqué dans un terminal de télécommunications tel qu'un téléphone mobile par exemple.

De façon connue, les microcircuits de carte à puce sont généralement aptes à coopérer selon plusieurs protocoles de communication avec des entités externes (lecteurs, terminaux...). Le protocole de communication utilisé historiquement par les cartes à puce est le protocole de communication par contact défini dans la norme ISO 7816. Ce protocole bien connu permet à une carte à puce de coopérer par contact avec les broches de connexion d'un lecteur externe afin de réaliser par exemple une transaction donnée (bancaire, authentification etc.).

De plus en plus de cartes à puce (de type bancaire notamment) sont également capables de fonctionner en mode sans contact selon la norme ISO 14443 en utilisant une antenne radiofréquence contenue dans l'épaisseur de la carte. La technologie NFC est basée sur cette norme. Certaines cartes à puce sont également conçues pour communiquer selon le protocole USB avec une entité externe.

D'autre part, il est fréquent pour un microcircuit (appelé « élément sécurisé ») embarqué dans un terminal de télécommunications d'être capable de fonctionner selon au moins deux protocoles de communication distincts. Ainsi, un élément sécurisé dans un téléphone mobile peut de façon connue coopérer avec un processeur mobile selon le protocole de communication par contact ISO 7816, et coopérer avec un module NFC (« front-end » NFC en anglo-saxon) par le protocole SWP (le front end NFC réalisant la communication sans contact avec un lecteur externe selon le protocole NFC). Un tel élément sécurisé peut dans certains cas être conçu pour fonctionner également selon le protocole SPI.

Les microcircuits, tels que ceux mentionnés ci-dessus, sont ainsi capables de communiquer indépendamment selon au moins deux protocoles de communication distincts avec des entités externes. Ceci rend de plus en plus difficile les tests qu'il est nécessaire de réaliser pour vérifier le bon fonctionnement des microcircuits, en particulier lors de leur fabrication. Les appareils de test doivent en effet permettre de vérifier le bon fonctionnement d'un microcircuit selon chacun des protocoles applicables.

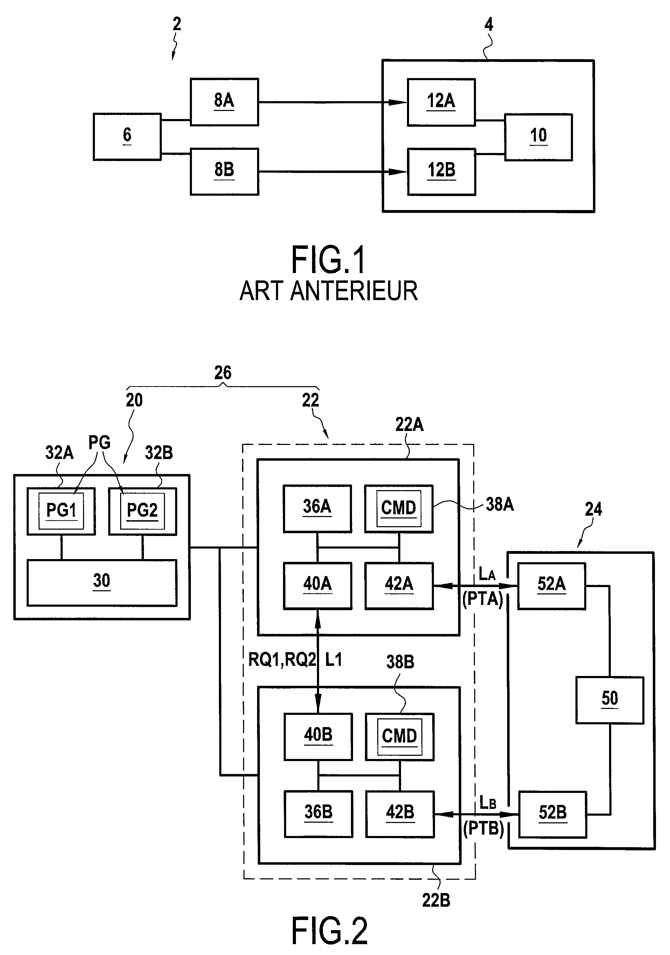

La figure 1 représente de façon schématique un dispositif de test 2 connu comportant une unité de commande 6 apte à contrôler deux unités de contrôle 8A et 8B. Cet exemple de testeur 2 est prévu pour tester un microcircuit 4 selon deux protocoles de communication distincts. Pour ce faire, les unités de contrôle 8A et 8B sont aptes à traiter des commandes provenant de l'unité de commande 6 et, en réponse à ces commandes, à envoyer des commandes au microcircuit 4 selon respectivement un premier et un deuxième protocole de communication, ces deux protocoles étant distincts l'un de l'autre. Le microcircuit 4 comporte ici un processeur 10, une première interface 12A apte à communiquer avec l'unité de contrôle 8A selon le premier protocole, et une deuxième interface 12B apte à communiquer avec l'unité de contrôle 8B selon le deuxième protocole.

Les dispositifs de test, tels que celui représenté en figure 1, deviennent de plus en plus complexes du fait qu'ils doivent être capables de tester en parallèle chacune des interfaces de communication du microcircuit qui est l'objet du test.

Il n'existe pas aujourd'hui de solution satisfaisante permettant de tester efficacement des microcircuits selon au moins deux protocoles de communication distincts. En particulier, la déposante a constaté qu'il n'existe pas de solution permettant de vérifier efficacement le bon fonctionnement d'un microcircuit lorsque celui-ci communique avec l'extérieur selon au moins deux protocoles de communication distincts, en particulier simultanément.

### Objet et résumé de l'invention

A cet effet, la présente invention concerne un dispositif de test multiprotocole d'un microcircuit sécurisé, ledit dispositif de test comprenant :
- une première unité de contrôle apte à réaliser un premier envoi d'une première commande au microcircuit selon un premier protocole de communication ; et
- une deuxième unité de contrôle apte à réaliser un deuxième envoi d'une deuxième commande au microcircuit selon un deuxième protocole de communication distinct dudit premier protocole de communication ;
lesdites première et deuxième unités de contrôle étant aptes à communiquer ensemble de sorte à déclencher lesdits premier et deuxième envois de façon coordonnée dans le temps.

Ainsi, le dispositif selon l'invention prévoit que les deux unités de contrôle s'accordent de manière à déclencher les envois selon un critère temporel défini préalablement. On peut ainsi tester des plus précis qu'avec les dispositifs selon l'art antérieur puisque toutes les conditions temporelles peuvent être testées.

Par ailleurs, on peut noter que le dispositif de test peut être par exemple apte à observer le traitement par le microcircuit de chaque commande. Dans ce mode de réalisation, toutes les étapes d'un test sont mises en oeuvre par le dispositif de test. Selon un mode particulier de réalisation :
- la première unité de contrôle est configurée pour déclencher le premier envoi seulement si une première requête de synchronisation est reçue de la deuxième unité de contrôle,
- la deuxième unité de contrôle est configurée pour déclencher le deuxième envoi seulement si une deuxième requête de synchronisation est reçue de la première unité de contrôle.

On notera que par « reçue de la première/deuxième unité de contrôle », on entend que c'est la première deuxième unité de contrôle qui émet la requête de synchronisation.

Selon un mode particulier de réalisation : la première unité de contrôle comprenant une première mémoire et la deuxième unité de contrôle comprenant une deuxième mémoire,
la première unité de contrôle étant apte à stocker la première commande dans la première mémoire et la deuxième unité de contrôle étant apte à stocker la deuxième commande dans la deuxième mémoire, dans lequel :
- la première unité de contrôle est configurée pour envoyer la première requête de synchronisation à la deuxième unité de contrôle lorsque la première unité de contrôle a achevé de stocker la première commande dans la première mémoire ;
- la deuxième unité de contrôle est configurée pour envoyer la deuxième requête de synchronisation à la première unité de contrôle lorsque la deuxième unité de contrôle a achevé de stocker la deuxième commande dans la deuxième mémoire.

Selon un mode particulier de réalisation : :
- la première unité de contrôle est apte à stocker la première commande dans la première mémoire à partir de premières données reçues depuis l'extérieur de ladite première unité de contrôle ;
- la deuxième unité de contrôle est apte à stocker la deuxième commande dans la deuxième mémoire à partir de deuxièmes données reçues depuis l'extérieur de ladite deuxième unité de contrôle.

Selon un mode particulier de réalisation : la première unité de contrôle est configurée pour recevoir une commande de synchronisation pour que ladite première unité de contrôle stocke les prochaines données reçues de l'extérieur associées à ladite première commande,
et la deuxième unité de contrôle est configurée pour recevoir une commande de synchronisation pour que ladite deuxième unité de contrôle stocke les prochaines données reçues de l'extérieur associées à ladite deuxième commande.

Selon un mode particulier de réalisation : les premières données comprennent la première commande et les deuxièmes données comprennent la deuxième commande.

Selon un mode particulier de réalisation :
- la première unité de contrôle est configurée pour déclencher le premier envoi immédiatement sur détection que la première requête de synchronisation a été envoyée à la deuxième unité de contrôle et que la deuxième requête de synchronisation a été reçue de la deuxième unité de contrôle ;
- la deuxième unité de contrôle est configurée pour déclencher le deuxième envoi immédiatement sur détection que la deuxième requête de synchronisation a été envoyée à la première unité de contrôle et que la première requête de synchronisation a été reçue de la première unité de contrôle.

Selon un mode particulier de réalisation :
- la première unité de contrôle est configurée pour déclencher le premier envoi après un premier délai à compter de la détection que la première requête de synchronisation a été envoyée à la deuxième unité de contrôle et que la deuxième requête de synchronisation a été reçue de la deuxième unité de contrôle, le premier délai étant fonction d'une première donnée temporelle reçue par la première unité de contrôle ;
- la deuxième unité de contrôle est configurée pour déclencher le deuxième envoi après un deuxième délai à compter de la détection que la première requête de synchronisation a été envoyée à la deuxième unité de contrôle et que la deuxième requête de synchronisation a été reçue de la deuxième unité de contrôle, le deuxième délai étant fonction d'une deuxième donnée temporelle reçue par la deuxième unité de contrôle ;

Selon un mode particulier de réalisation : lesdites données reçues de l'extérieur associées à ladite première commande comportent ledit premier délai,
lesdites données reçues de l'extérieur associées à ladite deuxième commande comportent ledit deuxième délai.

Selon un mode particulier de réalisation :
la première unité de contrôle est configurée pour recevoir et stocker ledit premier délai au moyen d'un premier message additionnel, la deuxième unité de contrôle est configurée pour recevoir et stocker ledit deuxième délai au moyen d'un premier message additionnel.

Selon un mode particulier de réalisation :
les première et deuxième unités de contrôle sont configurées pour envoyer respectivement les première et deuxième requêtes de synchronisation sous la forme d'un signal électrique ou d'un signal optique.

Selon un mode particulier de réalisation, le microcircuit sécurisé comprend :
- une première interface à partir de laquelle le microcircuit sécurisé est apte à communiquer selon le premier protocole de communication avec la première unité de contrôle ; et
- une deuxième interface à partir de laquelle le microcircuit sécurisé est apte à communiquer selon le deuxième protocole de communication avec la deuxième unité de contrôle ;
et dans lequel l'une au moins parmi la première commande et la deuxième commande est une commande d'activation d'interface commandant au microcircuit sécurisé l'activation de la première interface ou de la deuxième interface.

Selon un mode particulier de réalisation, les premier et deuxième protocoles de communication sont chacun choisis parmi les protocoles suivants : ISO 7816, ISO 14443, SWP, SPI, et USB.

Selon un mode particulier de réalisation, le microcircuit sécurisé est un microcircuit sécurisé d'une carte à puce, ou un élément sécurisé apte à être intégré et coopérer avec un terminal mobile.

Selon un mode particulier de réalisation, le microcircuit sécurisé est un élément sécurisé apte à être intégré et coopérer avec un terminal mobile, l'une parmi la première et la deuxième unité de contrôle étant apte à simuler un module NFC pour communiquer selon le protocole de communication sans contact SWP avec le microcircuit sécurisé.

Selon un mode particulier de réalisation, lesdites première et deuxième unités de contrôle sont configurées pour communiquer ensemble de sorte à ce qu'il y ait un décalage temporel maximal de 100 nanosecondes entre les déclenchements desdits premier et deuxième envois.

Selon un mode particulier de réalisation, lesdites première et deuxième unités de contrôle sont configurées pour communiquer ensemble de sorte à déclencher simultanément lesdits premier et deuxième envois.

Selon un mode particulier de réalisation, le dispositif comprend une unité de gestion d'alimentation configurée pour maintenir une alimentation électrique au microcircuit sécurisé tant qu'au moins l'une parmi la première unité de contrôle et la deuxième unité de contrôle est en cours de communication avec le microcircuit sécurisé.

L'invention propose également un système de test comprenant :
- un dispositif de test tel que défini ci-avant, et
- une unité de commande apte à commander la première unité de contrôle du dispositif de test en exécutant un premier script, et apte à commander la deuxième unité de contrôle du dispositif de test en exécutant un deuxième script, les premier et deuxième scripts comprenant des instructions pour réaliser un test multiprotocole d'un microcircuit à partir desdites première et deuxième unités de contrôle.

L'invention propose également un procédé de test multiprotocole d'un microcircuit sécurisé mis en oeuvre par un dispositif de test comprenant une première unité de contrôle et une deuxième unité de contrôle, ledit procédé de test comprenant :
- premier envoi, par la première unité de contrôle, d'une première commande au microcircuit sécurisé selon un premier protocole de communication ;
- deuxième envoi, par la deuxième unité de contrôle, d'une deuxième commande au microcircuit sécurisé selon un deuxième protocole de communication distinct dudit premier protocole de communication ; et
- préalablement auxdits premier et deuxième envois, communication entre les première et deuxième unités de contrôle de sorte à déclencher lesdits premier et deuxième envois de façon coordonnée dans le temps.

L'invention propose également un programme d'ordinateur comportant des instructions pour l'exécution des étapes d'un procédé de test tel que défini ci-avant lorsque ledit programme est exécuté par un ordinateur.

A noter que les programme d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de test tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 déjà décrite représente, de manière schématique, un dispositif de test multiprotocole destiné à tester de façon conventionnelle un microcircuit selon deux protocoles de communication distincts ;
- la figure 2 représente, de manière schématique, la structure d'un système de test multiprotocole comportant une unité de commande et des unités de contrôle pour tester selon plusieurs protocoles de communication un microcircuit, conformément à un mode de réalisation particulier de l'invention ;
- la figure 3 représente, sous forme d'un organigramme, les étapes d'un procédé de test multiprotocole conforme à un mode de réalisation particulier de l'invention ;
- la figure 4 représente, sous forme d'un organigramme, la gestion de l'alimentation électrique du microcircuit faisant l'objet du test représenté en figure 3, conformément à un mode de réalisation particulier ; et
- la figure 5 représente schématiquement un exemple de circuit permettant de contrôler l'alimentation du microcircuit conformément au mode de réalisation représenté en figure 4.

### Description détaillée de plusieurs modes de réalisation

La présente invention concerne les tests multiprotocoles de microcircuits et porte plus particulièrement sur un dispositif de test multiprotocole d'un microcircuit et sur un procédé de test correspondant mis en oeuvre par un tel dispositif de test.

Dans l'exposé qui suit, l'invention est décrite dans le cadre de tests multiprotocoles d'un microcircuit d'une carte à puce. On comprendra toutefois que l'invention n'est pas limitée à cet exemple et s'applique plus généralement au test multiprotocole d'un quelconque microcircuit apte à communiquer avec un ou des entités externes selon au moins deux protocoles de communication distincts.

Par ailleurs, les exemples de réalisation décrits ci-après concernent le test d'un microcircuit selon deux protocoles de communication distincts, par exemple le protocole de communication par contact ISO 7816 et le protocole de communication sans contact ISO 14443. L'invention n'est néanmoins pas limitée à ces deux protocoles et peut être appliquée au test d'un microcircuit selon le protocole ISO 7816 et le protocole SWP décrit dans la norme ETSI TS 102613. Dans le protocole SWP, c'est la partie « front end » NFC bien connue de l'homme du métier qui effectue le transfert des données reçues selon le protocole SWP. On comprendra que l'invention s'applique plus généralement au test d'un microcircuit selon au moins deux quelconques protocoles de communication distincts l'un de l'autre. L'invention s'applique ainsi aux tests de microcircuits selon N protocoles distincts, N étant un entier égal à 2, 3 ou plus.

Sauf indications contraires, les éléments communs ou analogues à plusieurs figures portent les mêmes numéros de références et présentent des caractéristiques identiques ou analogues, de sorte que ces éléments communs ne sont généralement pas à nouveau décrits par souci de simplicité.

Comme déjà indiqué, les microcircuits sont aujourd'hui souvent conçus pour coopérer en parallèle selon au moins deux protocoles de communication distincts avec des entités externes. La déposante a développé une solution permettant de tester des cas critiques dans lesquels un microcircuit communique simultanément avec l'extérieur selon au moins deux protocoles de communication distincts. D'autres cas critiques correspondent à l'utilisation de deux protocoles avec des conditions temporelles qui différent de deux envois simultanés.

Une première solution pourrait consister à adapter le dispositif de test 2 représenté en **figure 1** pour coordonner dans le temps les commandes envoyées depuis l'unité de commande 6 aux unités de contrôle 8A et 8B de façon à déclencher l'envoi simultané de commandes depuis les unités de contrôle 8A, 8B vers le microcircuit 4 selon les premier et deuxième protocoles respectivement. Toutefois, il a été constaté qu'un temps de latence persiste généralement entre les envois effectifs des commandes depuis les deux unités de contrôle 8A, 8B vers le microcircuit 4. Ceci peut s'expliquer notamment du fait que l'exécution des opérations dans le processeur de chaque unité de contrôle 8A, 8B est généralement gérée par un ordonnanceur qui définit les priorités concernant les tâches à accomplir à un instant donné.

Il est par conséquent très difficile à partir de la structure représentée en **figure 1** d'obtenir une réelle simultanéité dans l'envoi des commandes depuis les unités de contrôle 8A et 8B.

L'invention vise notamment à pallier ces problèmes et à offrir une solution permettant d'envoyer simultanément, et selon différents protocoles de communication, des commandes du dispositif de test au microcircuit objet du test.

La **figure 2** représente schématiquement un système de test multiprotocole 26 destiné à tester selon deux protocoles de communication distincts (PTA et PTB) un microcircuit 24, conformément à un mode de réalisation de l'invention. Dans cet exemple, PTA correspond par exemple au protocole de communication par contact défini dans la norme ISO 7816 et PTB correspond au protocole de communication SWP décrit dans la norme ETSI TS 102613.

Le système de test 26 comprend ici une unité de commande 20 et un dispositif de contrôle 22. Le dispositif de contrôle 22 comprend une première unité de contrôle 22A et une deuxième unité de contrôle 22B, ces unités 22A et 22B étant aptes respectivement à tester indépendamment le microcircuit 24 selon les protocoles de communication PTA et PTB.

Plus spécifiquement, l'unité de commande 20 est apte à commander les unités de contrôle 22A et 22B afin de réaliser un test multiprotocole selon un mode de réalisation particulier de l'invention. Pour ce faire, l'unité de commande 20 comprend dans cet exemple un processeur 30, une mémoire 32A dans laquelle est stocké un programme d'ordinateur PG1 et une mémoire 32B dans laquelle est stocké un programme d'ordinateur PG2. On comprendra que les mémoires 32A et 32B peuvent former une seule et même mémoire. Dans cet exemple, les programmes PG1 et PG2 forment ensemble un programme noté PG.

Les mémoires 32A et 32B peuvent chacune être une mémoire non volatile réinscriptible ou une mémoire morte (ROM).

Les programmes PG1 et PG2 sont ici des scripts comprenant chacun des instructions pour réaliser un test multiprotocole du microcircuit 24 à partir des unités de contrôle 22A, 22B.

L'unité de commande 20 est apte à commander la première unité de contrôle 22A du dispositif de test 22 en exécutant le premier script PG1, et apte à commander la deuxième unité de contrôle 22B du dispositif de test 22 en exécutant le deuxième script PG2, les premier et deuxième scripts comprenant des instructions pour mettre en oeuvre un test multiprotocole du microcircuit 24.

L'unité de commande 20 est par exemple un ordinateur ou tout autre unité de commande apte à commander les unités de contrôle 22A, 22B afin de mettre en oeuvre un procédé de test multiprotocole conformément à un mode réalisation particulier de l'invention.

L'unité de contrôle 22A comprend un processeur 36A, une mémoire 38A, une première interface de communication 40A et une deuxième interface de communication 42A. Sur commande de l'unité de commande 20 exécutant le script PG1, l'unité de contrôle 22A est apte à envoyer au moins une commande selon le protocole PTA au microcircuit 24. Chaque commande est envoyée par l'unité de contrôle 22A au microcircuit 24 via une liaison de communication LA qui est une liaison par contact dans le cas présent.

De façon analogue, l'unité de contrôle 22B comprend un processeur 36B, une mémoire 38B, une première interface de communication 40B et une deuxième interface de communication 42B. Sur commande de l'unité de commande 20 exécutant le script PG2, l'unité de contrôle 22B est apte à envoyer au moins une commande selon le protocole PTB au microcircuit 24. Chaque commande est envoyée par l'unité de contrôle 22B au microcircuit 24 via une liaison de communication LB qui est une liaison selon le protocole SWP.

Les mémoires 38A et 38B peuvent chacune être une mémoire non volatile réinscriptible ou une mémoire morte (ROM). De plus, chacune de ces mémoires 38A, 38B est apte à stocker des données reçues de l'unité de commande 20.

Dans cet exemple, les mémoires 38A et 38B sont configurées pour mémoriser temporairement (buffer) des commandes (ou données) notées ici CMD provenant de l'unité de commande 20 lors de la mise en oeuvre d'un test multiprotocole du microcircuit 24 selon un mode de réalisation particulier de l'invention.

Par ailleurs, les unités de contrôles 22A, 22B sont aptes à communiquer ensemble via une liaison de communication L1 à l'aide de leur interface de communication respective 40A, 40B. Les unités de contrôle 22A et 22B sont en particulier aptes à se synchroniser en communiquant ensemble via cette liaison L1 de façon à déclencher simultanément l'envoi de commandes au microcircuit 24 selon respectivement les protocoles PTA et PTB.

La liaison L1 comporte ici deux connexions électriques.

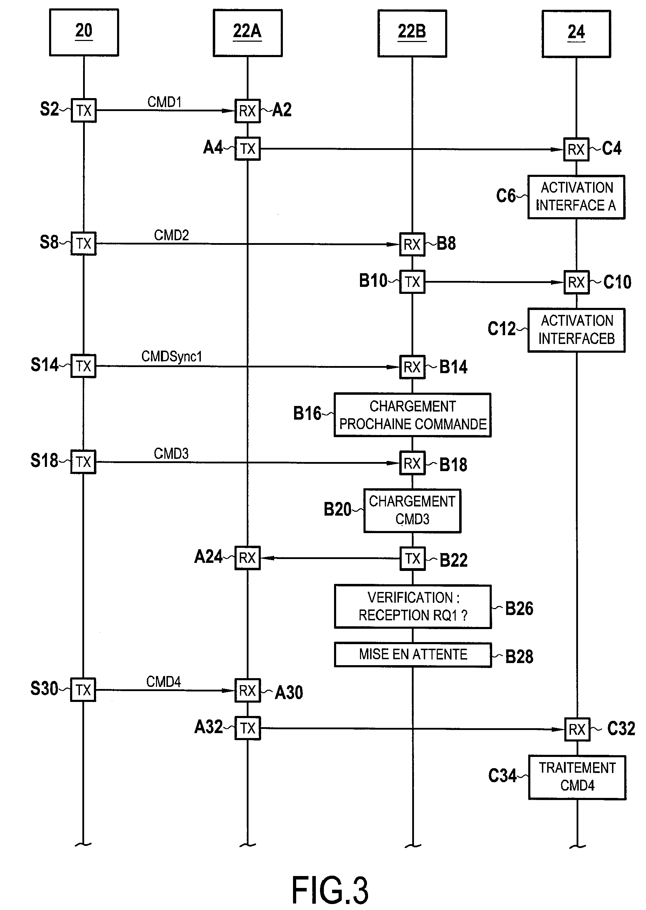

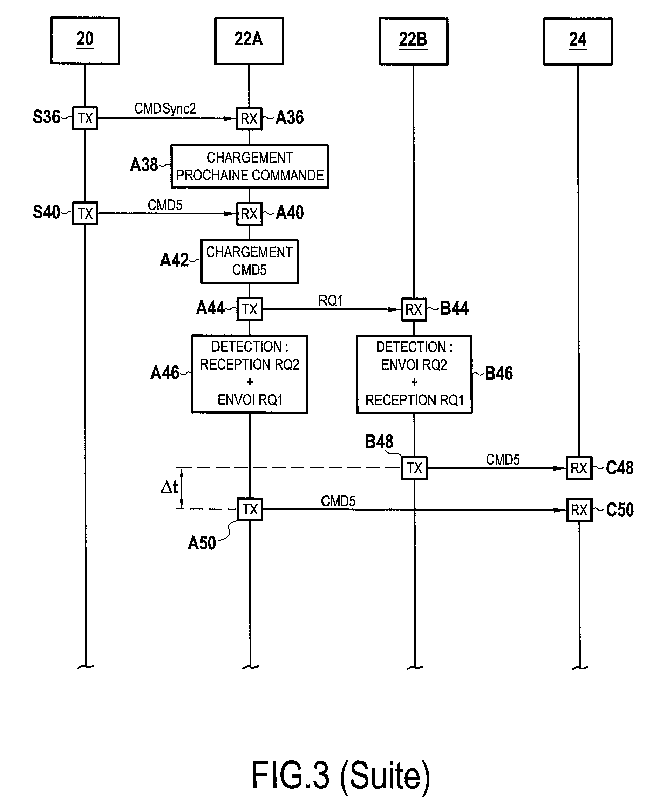

Comme décrit ultérieurement en référence à la **figure 3**, les unités de contrôle 22A, 22B peuvent ainsi se synchroniser afin de réaliser de façon coordonnée dans le temps deux envois, à savoir :
- un premier envoi d'une première commande selon le protocole PTA depuis l'unité de contrôle 22A vers le microcircuit 24 ; et
- un deuxième envoi d'une deuxième commande selon le protocole PTB depuis l'unité de contrôle 22B vers le microcircuit 24.

La communication entre les unités de contrôle 22A et 22B prend ici la forme d'une ou plusieurs requêtes envoyées depuis l'unité de contrôle 22A à l'unité de contrôle 22B et inversement via la liaison L1. La liaison L1 comportant deux connexions électriques, l'envoi d'une requête peut par exemple être effectué en changeant un niveau de tension appliqué sur la connexion électrique pouvant être détecté par l'autre unité de contrôle. Dans un autre mode de réalisation, les requêtes ne prennent pas la forme d'un signal électrique mais d'un signal optique.

Comme décrit par la suite en référence à la **figure 3**, l'unité de contrôle 22A est configurée dans cet exemple de réalisation pour envoyer une requête RQ1 à l'unité de contrôle 22B, et l'unité de contrôle 22B est configurée pour envoyer une requête RQ2 à l'unité de contrôle 22A. En d'autres termes, chaque requête échangée entre les unités de contrôle 22A, 22B peut prendre la forme d'un signal électrique ou d'un signal optique par exemple.

Les unités de contrôle 22A et 22B peuvent prendre la forme de cartes de test indépendantes l'une de l'autre ou être formées sur une seule et même carte de test connectée via les liaisons LA et LB au microcircuit 24.

Par ailleurs, le microcircuit 24 comprend un processeur 50 ainsi que des interfaces de communication 52A et 52B.

L'interface 52A permet au processeur 50 de communiquer via la liaison LA selon le protocole PTA avec l'unité de contrôle 22A. L'interface 52A est en particulier apte à recevoir des commandes de l'unité de contrôle 22A via la liaison LA selon le protocole PTA.

De façon analogue, l'interface 52B permet au processeur 50 de communiquer via la liaison LB selon le protocole PTB avec l'unité de contrôle 22B. L'interface 52B est en particulier apte à recevoir des commandes de l'unité de contrôle 22B via la liaison LB selon le protocole PTB.

Un mode de réalisation de l'invention est à présent décrit en référence au diagramme de la **figure 3****.** Plus précisément, les unités de contrôle 22A, 22B du dispositif de test 22 mettent en oeuvre un procédé de test multiprotocole du microcircuit 24, conformément à un mode de réalisation particulier.

Dans le mode de réalisation décrit ici, les unités de contrôles 22A, 22B sont commandées par l'unité de commande 20 qui exécute les scripts PG1 et PG2 (notés collectivement PG). Le script PG1 cause en particulier l'envoi de commandes de l'unité de commande 20 à l'unité de contrôle 22A tandis que le script PG2 cause en particulier l'envoi de commandes de l'unité de commande 20 à l'unité de contrôle 22B.

Toujours dans ce mode de réalisation, l'unité de contrôle 22A communique avec le microcircuit 24 via la liaison LA suivant le protocole PTA. L'unité de contrôle 22B communique quant à elle avec le microcircuit 24 via la liaison LB suivant le protocole PTB.

Comme cela apparaîtra dans l'exposé qui suit, le mode de réalisation envisagé ici permet de déclencher l'envoi coordonné dans le temps, par les unités de contrôle 22A, 22B, au microcircuit 24, de deux commandes CMD3 et CMD5 selon respectivement les protocoles PTA et PTB.

Au cours d'une étape S2, l'unité de commande 20 envoie une commande CMD1 à l'unité de contrôle 22A. L'unité de contrôle 22A reçoit à l'étape A2 la commande CMD1 puis envoie (A4) cette même commande CMD1 au microcircuit 24 via la liaison LA selon le protocole PTA. Dans cet exemple particulier, la commande CMD1 est une commande d'activation de l'interface 52A du microcircuit 24.

En réponse à la commande CMD1 reçue à l'étape C4, le microcircuit 24 (et plus particulièrement le processeur 50) active (C6) l'interface 52A.

Au cours d'une étape S8, l'unité de commande 20 envoie une commande CMD2 à l'unité de contrôle 22B. La requête RQ1 est dans cet exemple une commande d'activation de l'interface 52B du microcircuit 24. L'unité de contrôle 22B reçoit à l'étape B8 la commande CMD2 puis envoie (B10) cette même commande CMD2 au microcircuit 24 via la liaison LB selon le protocole PTB. En réponse à la commande CMD2 reçue à l'étape C10, le microcircuit 24 (et plus particulièrement le processeur 50) active (C12) l'interface 52B.

Au cours d'une étape S14, l'unité de commande 20 envoie une commande de synchronisation CMDSync1 à l'unité de contrôle 22B qui la reçoit à l'étape B14. La commande de synchronisation CMDSync1 est élaborée pour que l'unité de contrôle 22B unité stocke les prochaines données reçues de l'extérieur par l'unité de contrôle 22B associées à la commande CMD3 décrite précédemment. De ce fait, à l'étape B16, l'unité de contrôle 22B se met en attente pour un chargement des prochaines données. Cette mise en attente bloque tous envois de commande depuis l'unité de contrôle 22B vers le microcircuit 24. Cette état de blocage est maintenu au moins tant que l'unité de contrôle 22B n'a pas reçu une requête spécifique de l'unité de commande 20 causant la fin de cette mise en attente.

Pendant que l'unité de contrôle 22B est mise en attente, l'unité de contrôle 22A peut envoyer si besoin des commandes au microcircuit 24 selon le protocole PTA.

A l'étape S18, la commande CMD3 est émise par l'unité de commande 20. Cette commande est reçue à l'étape B18 et l'unité de contrôle 22B qui était en attente charge alors la commande CMD3 dans sa mémoire pour un envoi ultérieur coordonné dans le temps (étape B20).

A l'étape B22, la requête de synchronisation RQ2 est émise à l'unité de contrôle 22A au moyen de la liaison L1 et cette requête est reçue à l'étape A24 par l'unité de contrôle 22A.

Le traitement d'une commande par l'unité de contrôle 22A est illustré à partir de l'étape S30 dans laquelle l'unité de commande 20 envoie à l'unité de contrôle 22A une commande CMD4. Cette commande CMD4 est reçue à l'étape A30. Puisqu'aucune commande de synchronisation n'a été reçue par l'unité de contrôle 22A, l'unité de contrôle 22A transmet immédiatement (étape A32) la commande CMD4 au microcircuit 24 (étape C32) de sorte que le processeur 50 du microcircuit 24 réalise un traitement (étape C34). La nature de ce traitement C34 et la manière dont il est réalisé peuvent varier selon les besoins.

Ultérieurement à la mise en oeuvre du traitement de l'étape C34, l'unité de commande 20 envoie dans une étape S36 une commande de synchronisation CMDSync2 à l'unité de contrôle 22A. La commande de synchronisation CMDSync2 est analogue à la commande de synchronisation CMDSync1 décrite ci-avant.

La réception (étape A36) de la commande de synchronisation CMDSync2 provoque le stockage des prochaines données reçues de l'extérieur par l'unité de contrôle 22A associées à la commande CMD5 décrite précédemment. De ce fait, à l'étape A38, l'unité de contrôle 22A se met en attente pour un chargement des prochaines données.

A l'étape S40, l'unité de commande 20 envoie la commande CMD5 à l'unité de contrôle 22A et dès sa réception (étape A40), la commande CMD5 est chargée dans la mémoire de l'unité de contrôle 22A (étape A42).

A l'étape A44, la requête de synchronisation RQ1 est transmise à l'unité de contrôle 22B qui la reçoit à l'étape B44. Préalablement à la réception de l'étape B44, l'unité de contrôle 22B était en attente de la requête RQ1.

Les étapes A46 et B46 sont alors mises en oeuvre : dans l'étape A46, l'unité de contrôle 22A détecte que la requête RQ2 a été reçue et que la requête RQ1 a été envoyée, et dans l'étape B46, l'unité de contrôle 22B détecte que la requête RQ1a été reçue et que la requête RQ2 a été envoyée au cours de l'étape B22.

Les deux unités de contrôle 22A et 22B sont maintenant coordonnées dans le temps et elles peuvent envoyer les commandes CMD3 et CMD5 au microcircuit 24.

Dans l'exemple illustré sur la figure 3, l'unité de contrôle 22B envoie immédiatement dans une étape B48 la commande CMD3 au microcircuit 24, et la réception de cette commande CMD3 (étape C48) correspond à un test utilisant le protocole PTB.

L'unité de contrôle 22A envoie la commande CMD5 à l'expiration d'un délai Δt dans une étape A50. Le délai Δt peut avoir été reçu par l'unité de contrôle 22A lors de la réception de la commande de synchronisation CMDSync2 (étape A36). Alternativement, ce délai peut avoir été reçue dans un message additionnel envoyé par l'unité de commande 20 préalablement.

La réception (étape C50) par le microcircuit 24 de la commande CMD5 correspond à un test selon le protocole PTA.

Dans un autre mode de réalisation, il n'y a pas de délai Δt et l'envoi des commandes CMD3 et CMD5 est quasi simultané voire simultané.

On comprendra bien entendu que l'invention s'applique aux envois coordonnés dans le temps d'au moins deux commandes (ou données) quelconques à un même microcircuit selon des protocoles de communication distincts.

Selon un mode de réalisation particulier, au moins l'une parmi les commandes envoyées simultanément au microcircuit objet du test est une commande d'activation causant l'activation de l'interface de communication correspondante du microcircuit. Dans ce mode de réalisation, l'activation de l'interface n'a pas été réalisée préalablement comme tel est le cas dans le mode de réalisation décrit en référence à la figure 3.

La présente invention permet par exemple de tester un microcircuit selon au moins deux protocoles de communication distincts choisis dans la liste suivante : ISO 7816, ISO 14443, SWP, SPI, et USB.

La communication mise en oeuvre entre les unités de contrôle 22A et 22B via la liaison L1 (à savoir l'envoi des requête RQ1 et RQ2 dans cet exemple) permet auxdites unités de contrôle 22A, 22B de se coordonner dans le temps de sorte à réaliser les étapes d'envoi A30 et B32 à des instants souhaités, en fonction de l'application et du type de test.

L'invention est avantageuse en ce qu'elle permet d'avoir une maîtrise précise du moment où sont déclenchés les envois des commandes CMD3 et CMD5 respectivement. On palie ainsi les problèmes de manque de maîtrise concernant l'ordre et le moment d'exécution des opérations à accomplir tel que défini par l'ordonnanceur d'un processeur dans un dispositif de test conventionnel, comme déjà évoqué précédemment.

L'envoi de commandes de synchronisation CMDSync1 et CMDSync2 permet ainsi d'éviter tout envoi précoce d'une commande par l'une des unités de contrôle de l'invention vers le microcircuit. On peut noter que les mémoires des unités de contrôle 22A et 22B doivent être au moins suffisamment grandes pour pouvoir stocker les commandes CMD3 et CMD5.

On notera par ailleurs qu'il convient de maintenir le microcircuit alimenté électriquement tant qu'au moins l'une parmi la première unité de contrôle 22A et la deuxième unité de contrôle 22B est en cours de communication avec le microcircuit 24.

A cette fin, le dispositif de test multiprotocole 22 comprend, dans un mode de réalisation particulier, une unité de gestion d'alimentation configurée pour maintenir une alimentation électrique Vcc au microcircuit 24 tant qu'au moins l'une parmi les unités de contrôle 22A et 22B est en cours de communication avec le microcircuit 24.

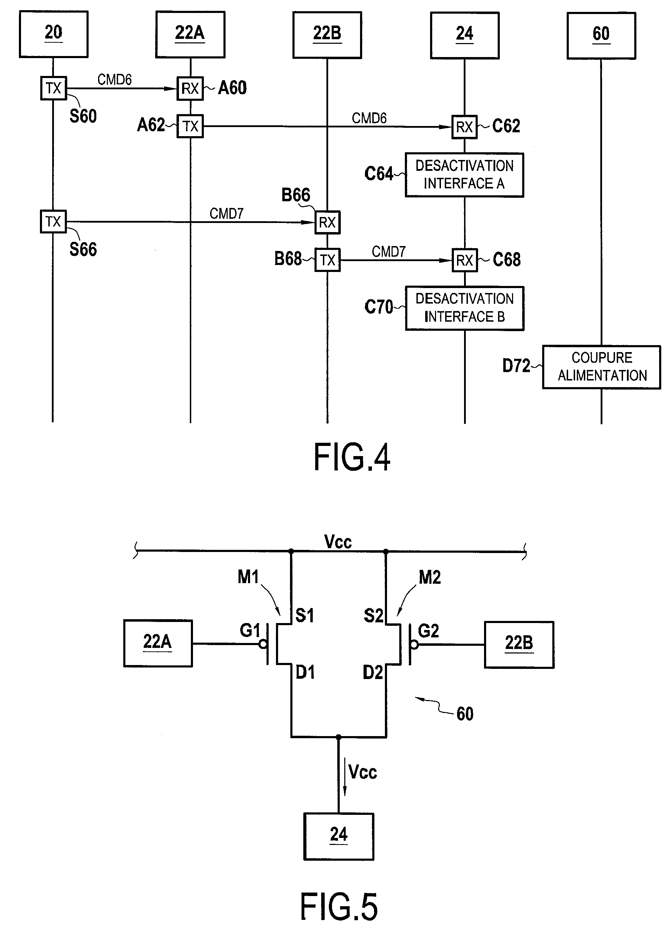

La fin d'un test multiprotocole du microcircuit 24 conformément à un mode de réalisation particulier est à présent décrite en référence à la **figure 4****.** Ce mode de réalisation comprend l'utilisation d'une unité de gestion d'alimentation (notée 60) telle que mentionnée ci-dessus.

On suppose ici que les envois coordonnés de commandes vers le microcircuit 24 ont été effectués et que ledit microcircuit 24 est toujours alimenté électriquement.

Au cours d'une étape S60, l'unité de commande 20 envoie une commande CMD6 à l'unité de contrôle 22A qui reçoit ladite commande à l'étape A60. En réponse, l'unité de contrôle 22A envoie (A62) la commande CMD6 au microcircuit 24 selon le protocole PTA. La commande CMD6 est ici une commande de désactivation commandant au microcircuit 24 la désactivation de l'interface 52A.

En réponse à la commande CMD6 ainsi reçue (C62), le processeur 50 cause (C64) la désactivation de l'interface 52A.

De façon analogue, l'unité de commande 20 envoie (S66) une commande CMD7 à l'unité de contrôle 22B qui reçoit ladite commande à l'étape B66. En réponse, l'unité de contrôle 22B envoie (B68) la commande CMD7 au microcircuit 24 selon le protocole PTB. La commande CMD7 est ici une commande de désactivation commandant au microcircuit 24 la désactivation de l'interface 52B.

En réponse à la commande CMD7 ainsi reçue (C68), le processeur 50 cause (C70) la désactivation de l'interface 52A.

L'unité de gestion d'alimentation 60 détermine à l'étape D72 que toutes les interfaces de communication (à savoir les interfaces 52A et 52B dans cet exemple) du microcircuit 24 sont désactivées et, en réponse à cette détermination, coupe l'alimentation électrique du microcircuit 24.

Un exemple de réalisation de l'unité de gestion 60 est à présent décrit ci-après en référence à la **figure 5****.**

L'unité de gestion d'alimentation 60 comprend dans cet exemple un circuit formé par deux transistors MOSFET à canal P (notés M1 et M2) montés en parallèles de façon à contrôler l'alimentation électrique fournie au microcircuit 24 depuis une ligne d'alimentation Vcc.

Plus spécifiquement, la source S1 du MOSFET M1 et la source S2 du MOSFET M2 sont connectées à la ligne d'alimentation Vcc. De plus, le drain D1 du MOSFET M1 et le drain D2 du MOSFET M2 sont connectés au microcircuit 24 de façon à pouvoir alimenter électriquement ce dernier.

L'unité de contrôle 22A est connectée à la grille G1 du MOSFET M1 et l'unité de contrôle 22B est connectée à la grille G2 du MOSFET M2. De cette façon, les unités de contrôle 22A, 22B sont aptes à bloquer ou non le passage de l'alimentation électrique Vcc vers le microcircuit 24.

Plus précisément, lorsque l'unité de contrôle 22A commande la désactivation de l'interface 52A du microcircuit 24, elle commande en outre la commutation à l'état bloqué du MOSFET M1 afin de bloquer le passage de l'alimentation Vcc via le transistor M1. De même, lorsque l'unité de contrôle 22B commande la désactivation de l'interface 52B du microcircuit 24, elle commande en outre la commutation à l'état bloqué du MOSFET M2 afin de bloquer le passage de l'alimentation Vcc via le transistor M2. En conséquence, le microcircuit 24 est toujours alimenté électriquement tant qu'au moins l'une des interfaces 52A, 52B du microcircuit 24 n'est pas désactivée. Lorsque les unités de contrôles 22A et 22B ont toutes deux commandé le blocage de l'alimentation Vcc, le microcircuit 24 cesse d'être alimenté.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

Comme déjà indiqué, des exemples de réalisation ont été décrits ci-avant pour tester un microcircuit selon deux protocoles distincts. On comprendra toutefois qu'il est possible de façon analogue de tester un microcircuit à l'aide de 3 unités de contrôle (ou plus) aptes chacune à envoyer une commande au microcircuit selon un protocole de communication, les protocoles utilisés étant distincts les uns des autres. Pour ce faire, les unités de contrôle sont configurées pour se coordonner en communiquant ensemble de sorte à réaliser l'envoi des commandes au microcircuit selon les différents protocoles de façon coordonnée dans le temps.

Comme déjà indiqué, l'invention s'applique avantageusement, mais de façon non limitative, au test multiprotocole d'un microcircuit d'une carte à puce ou d'un microcircuit (dit « élément sécurisé ») embarqué dans un terminal de télécommunications tel qu'un téléphone mobile par exemple.

## Revendications

1. Dispositif de test multiprotocole d'un microcircuit sécurisé (24), ledit dispositif de test comprenant :
- une première unité de contrôle (22A) apte à réaliser un premier envoi d'une première commande au microcircuit selon un premier protocole de communication (PTA) ; et
- une deuxième unité de contrôle (22B) apte à réaliser un deuxième envoi d'une deuxième commande au microcircuit selon un deuxième protocole de communication (PTB) distinct dudit premier protocole de communication ;
lesdites première et deuxième unités de contrôle étant aptes à communiquer ensemble de sorte à déclencher lesdits premier et deuxième envois de façon coordonnée dans le temps.

2. Dispositif de test selon la revendication 1, dans lequel :
- la première unité de contrôle (22A) est configurée pour déclencher le premier envoi seulement si une première requête de synchronisation (RQi) est reçue de la deuxième unité de contrôle,
- la deuxième unité de contrôle (22B) est configurée pour déclencher le deuxième envoi seulement si une deuxième requête de synchronisation (RQi) est reçue de la première unité de contrôle.

3. Dispositif de test selon la revendication 2, la première unité de contrôle comprenant une première mémoire (38A) et la deuxième unité de contrôle comprenant une deuxième mémoire (38B),
la première unité de contrôle étant apte à stocker la première commande dans la première mémoire et la deuxième unité de contrôle étant apte à stocker la deuxième commande dans la deuxième mémoire, dans lequel :
- la première unité de contrôle est configurée pour envoyer la première requête de synchronisation à la deuxième unité de contrôle lorsque la première unité de contrôle a achevé de stocker la première commande dans la première mémoire ;
- la deuxième unité de contrôle est configurée pour envoyer la deuxième requête de synchronisation à la première unité de contrôle lorsque la deuxième unité de contrôle a achevé de stocker la deuxième commande dans la deuxième mémoire.

4. Dispositif de test selon la revendication 2 ou 3, dans lequel :
- la première unité de contrôle est apte à stocker la première commande dans la première mémoire à partir de premières données reçues depuis l'extérieur de ladite première unité de contrôle ;
- la deuxième unité de contrôle est apte à stocker la deuxième commande dans la deuxième mémoire à partir de deuxièmes données reçues depuis l'extérieur de ladite deuxième unité de contrôle.

5. Dispositif de test selon la revendication 4, dans lequel la première unité de contrôle est configurée pour recevoir une commande de synchronisation pour que ladite première unité de contrôle stocke les prochaines données reçues de l'extérieur associées à ladite première commande,
et la deuxième unité de contrôle est configurée pour recevoir une commande de synchronisation pour que ladite deuxième unité de contrôle stocke les prochaines données reçues de l'extérieur associées à ladite deuxième commande.

6. Dispositif de test selon la revendication 4, dans lequel les premières données comprennent la première commande et les deuxièmes données comprennent la deuxième commande.

7. Dispositif de test selon l'une quelconque des revendications 2 à 5, dans lequel :
- la première unité de contrôle est configurée pour déclencher le premier envoi immédiatement sur détection que la première requête de synchronisation a été envoyée à la deuxième unité de contrôle et que la deuxième requête de synchronisation a été reçue de la deuxième unité de contrôle ;
- la deuxième unité de contrôle est configurée pour déclencher le deuxième envoi immédiatement sur détection que la deuxième requête de synchronisation a été envoyée à la première unité de contrôle et que la première requête de synchronisation a été reçue de la première unité de contrôle.

8. Dispositif de test selon l'une quelconque des revendications 2 à 5, dans lequel :
- la première unité de contrôle est configurée pour déclencher le premier envoi après un premier délai à compter de la détection que la première requête de synchronisation a été envoyée à la deuxième unité de contrôle et que la deuxième requête de synchronisation a été reçue de la deuxième unité de contrôle, le premier délai étant fonction d'une première donnée temporelle reçue par la première unité de contrôle ;
- la deuxième unité de contrôle est configurée pour déclencher le deuxième envoi après un deuxième délai à compter de la détection que la première requête de synchronisation a été envoyée à la deuxième unité de contrôle et que la deuxième requête de synchronisation a été reçue de la deuxième unité de contrôle, le deuxième délai étant fonction d'une deuxième donnée temporelle reçue par la deuxième unité de contrôle.

9. Dispositif de test selon la revendication 8 dans sa combinaison avec la revendication 5, dans lequel lesdites données reçues de l'extérieur associées à ladite première commande comportent ledit premier délai,
lesdites données reçues de l'extérieur associées à ladite deuxième commande comportent ledit deuxième délai.

10. Dispositif de test selon la revendication 8, dans lequel la première unité de contrôle est configurée pour recevoir et stocker ledit premier délai au moyen d'un premier message additionnel, la deuxième unité de contrôle est configurée pour recevoir et stocker ledit deuxième délai au moyen d'un premier message additionnel.

11. Dispositif de test selon l'une quelconque des revendications 2 à 10, dans lequel les première et deuxième unités de contrôle sont configurées pour envoyer respectivement les première et deuxième requêtes de synchronisation sous la forme d'un signal électrique ou d'un signal optique.

12. Dispositif de test selon l'une quelconque des revendications 1 à 11, dans lequel le microcircuit sécurisé comprend :
- une première interface à partir de laquelle le microcircuit sécurisé est apte à communiquer selon le premier protocole de communication avec la première unité de contrôle ; et
- une deuxième interface à partir de laquelle le microcircuit sécurisé est apte à communiquer selon le deuxième protocole de communication avec la deuxième unité de contrôle ;
et dans lequel l'une au moins parmi la première commande et la deuxième commande est une commande d'activation d'interface commandant au microcircuit sécurisé l'activation de la première interface ou de la deuxième interface.

13. Dispositif de test selon l'une quelconque des revendications 1 à 12, dans lequel les premier et deuxième protocoles de communication sont chacun choisis parmi les protocoles suivants : ISO 7816, ISO 14443, SWP, SPI, et USB.

14. Dispositif de test selon la revendication 13, dans lequel le microcircuit sécurisé est un microcircuit sécurisé d'une carte à puce, ou un élément sécurisé apte à être intégré et coopérer avec un terminal mobile.

15. Dispositif de test selon la revendication 14, dans lequel le microcircuit sécurisé est un élément sécurisé apte à être intégré et coopérer avec un terminal mobile, l'une parmi la première et la deuxième unité de contrôle étant apte à simuler un module NFC pour communiquer selon le protocole de communication sans contact SWP avec le microcircuit sécurisé.

16. Dispositif de test selon l'une quelconque des revendications 1 à 15, dans lequel lesdites première et deuxième unités de contrôle sont configurées pour communiquer ensemble de sorte à ce qu'il y ait un décalage temporel maximal de 100 nanosecondes entre les déclenchements desdits premier et deuxième envois.

17. Dispositif de test selon la revendication 16, dans lequel lesdites première et deuxième unités de contrôle sont configurées pour communiquer ensemble de sorte à déclencher simultanément lesdits premier et deuxième envois.

18. Dispositif de test selon l'une quelconque des revendications 1 à 17, comprenant une unité de gestion d'alimentation configurée pour maintenir une alimentation électrique au microcircuit sécurisé tant qu'au moins l'une parmi la première unité de contrôle et la deuxième unité de contrôle est en cours de communication avec le microcircuit sécurisé.

19. Système de test comprenant :
- un dispositif de test selon l'une quelconque des revendications 1 à 18, et
- une unité de commande apte à commander la première unité de contrôle du dispositif de test en exécutant un premier script, et apte à commander la deuxième unité de contrôle du dispositif de test en exécutant un deuxième script, les premier et deuxième scripts comprenant des instructions pour réaliser un test multiprotocole d'un microcircuit à partir desdites première et deuxième unités de contrôle.

20. Procédé de test multiprotocole d'un microcircuit sécurisé mis en oeuvre par un dispositif de test comprenant une première unité de contrôle (22A) et une deuxième unité de contrôle (22B), ledit procédé de test comprenant :
- premier envoi, par la première unité de contrôle, d'une première commande au microcircuit sécurisé selon un premier protocole de communication ;
- deuxième envoi, par la deuxième unité de contrôle, d'une deuxième commande au microcircuit sécurisé selon un deuxième protocole de communication distinct dudit premier protocole de communication ; et
- préalablement auxdits premier et deuxième envois, communication entre les première et deuxième unités de contrôle de sorte à déclencher lesdits premier et deuxième envois de façon coordonnée dans le temps.

21. Programme d'ordinateur (PG) comportant des instructions pour l'exécution des étapes d'un procédé de test selon la revendication 20 lorsque ledit programme est exécuté par un ordinateur.

22. Support d'enregistrement lisible par un ordinateur sur lequel est enregistré un programme d'ordinateur (PG) comprenant des instructions pour l'exécution des étapes d'un procédé de test selon la revendication 20.
